(19) **Europäisches Patentamt / European Patent Office / Office européen des brevets**

(11) **EP 2 990 948 B1**

(12) **FASCICULE DE BREVET EUROPEEN**

(45) Date de publication et mention
de la délivrance du brevet:
**10.05.2017   Bulletin 2017/19**

(51) Int Cl.:
***G06F 11/14*** *(2006.01)*     ***G06F 11/20*** *(2006.01)*
***G06F 17/30*** *(2006.01)*

(21) Numéro de dépôt: **15182458.8**

(22) Date de dépôt: **26.08.2015**

(54) **NUAGE DE DONNEES**

DATENCLOUD

DATA CLOUD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.08.2014   FR 1458085**

(43) Date de publication de la demande:
**02.03.2016   Bulletin 2016/09**

(73) Titulaire: **BULL SAS**
**78340 Les Clayes sous Bois (FR)**

(72) Inventeurs:
• **AIELLO, Damien**
**38500 LA BUISSE (FR)**
• **DE LASTELLE DU PRE, Renaud**
**38000 GRENOBLE (FR)**
• **RADANLIEV, Martin**
**38000 GRENOBLE (FR)**

(74) Mandataire: **Cabinet Plasseraud**
**66 rue de la Chaussée d'Antin**
**75440 Paris Cedex 09 (FR)**

(56) Documents cités:
**WO-A1-2013/097147     US-A1- 2011 145 413**
**US-A1- 2014 189 124**

• **EI EI MON ET AL: "The privacy-aware access
control system using attribute-and role-based
access control in private cloud", BROADBAND
NETWORK AND MULTIMEDIA TECHNOLOGY
(IC-BNMT), 2011 4TH IEEE INTERNATIONAL
CONFERENCE ON, IEEE, 28 octobre 2011
(2011-10-28), pages 447-451, XP032118530, DOI:
10.1109/ICBNMT.2011.6155974 ISBN:
978-1-61284-158-8**

## Description

DOMAINE DE L'INVENTION

L'invention concerne le domaine des nuages de données, c'est-à-dire des nuages informatiques de données (« cloud » en langue anglaise, et plus particulièrement « cloud storage » ou « cloud computing » en langue anglaise). Ces nuages de données servent à des postes informatiques utilisateurs à stocker des données en volume important sans avoir nécessairement des ressources de stockage propres suffisantes pour le faire.

CONTEXTE DE L'INVENTION

Selon un premier art antérieur, il est connu un nuage de données privé dans lequel un seul groupe d'utilisateurs dûment identifiés peut utiliser le nuage de données privé. Ce nuage de données privé peut être totalement géré par une organisation extérieure au groupe d'utilisateurs, ce qui présente plusieurs inconvénients.

D'abord, le groupe d'utilisateurs n'a alors aucun contrôle sur le nuage de données, et en particulier sur les données stockées en commun dans ce nuage de données.

Ensuite, en cas de besoin d'extension du volume de stockage disponible dans le nuage de données, cette extension n'est pas toujours réalisable de manière simple et fluide, c'est-à-dire sans perturber notablement le fonctionnement existant du nuage de données.

Enfin, même si une telle extension du volume de stockage disponible dans le nuage de données est possible dans de bonnes conditions techniques, elle ne l'est qu'à des conditions financières bien plus désavantageuses que pour le volume de stockage initial dans le nuage de données (un peu comme un forfait téléphonique qui est bon marché mais où tout dépassement du forfait est facturé au prix fort).

Selon un deuxième art antérieur, il est connu un nuage de données privé dans lequel un seul groupe d'utilisateurs dûment identifiés peut utiliser le nuage de données privé. Même si ce nuage de données privé peut être géré en partie par le groupe d'utilisateurs, ce nuage de données présente cependant plusieurs inconvénients.

D'abord, le groupe d'utilisateurs n'aura qu'un contrôle souvent limité sur la gestion du fonctionnement du nuage de données, et même s'il avait un contrôle complet de cette gestion du fonctionnement, il n'aurait toujours aucun véritable contrôle sur les ressources de stockage stockant les données du nuage, celles-ci étant physiquement localisées chez un hébergeur lequel est distinct du groupe d'utilisateurs et sur lequel le groupe d'utilisateurs n'a en fait aucun véritable contrôle.

Par exemple, la question peut se poser de savoir s'il n'y a pas de fuites de certaines données hors du nuage, ou bien s'il n'y a pas de copie conservée quelque part lorsqu'un fichier est supprimé, ou encore si le nuage est vraiment fermé aux postes informatiques extérieurs au nuage, ou enfin si la redondance offerte est suffisante pour assurer une disponibilité et une sécurité satisfaisantes ?

Ensuite, en cas de besoin d'extension du volume de stockage disponible dans le nuage de données, l'hébergeur peut n'être pas plus souple que l'hébergeur dans le premier art antérieur et le groupe d'utilisateurs peut rencontrer des difficultés comparables à celles rencontrées dans un nuage de données selon le premier art antérieur, en particulier pour tout ce qui concerne les ressources de stockage mise en commun où le groupe d'utilisateurs, même s'il inclut les administrateurs du nuage de données, n'a pas tellement plus de véritable contrôle que dans le nuage de données selon le premier art antérieur.

Le document WO 2013/097147 & EP A1-2 784 985 décrit un système infonuagique et procédé pour générer des ressources de stockages associées et constitue l'état de la technique le plus proche.

RESUME DE L'INVENTION

Le but de la présente invention est de fournir un nuage de données palliant au moins partiellement les inconvénients précités.

Plus particulièrement, l'invention vise à fournir un nuage de données qui ne se contente pas de donner, au groupe d'utilisateurs, un certain contrôle, plus ou moins étendu, sur la mise en place et la gestion du nuage de données, mais qui donne plutôt, à ce groupe d'utilisateurs, un véritable contrôle, partiel ou total selon qu'une partie ou la totalité des postes informatiques contributeurs sont également postes informatiques utilisateurs, sur l'hébergement physique des données stockées en commun, ce qui n'est jamais le cas dans les premier et deuxième arts antérieurs connus.

Seul ce contrôle de l'hébergement physique des données, partiel ou total, va complètement garantir l'intégrité des données stockées en commun au groupe d'utilisateurs. Or, ce contrôle de l'hébergement physique des données est donné par le fait que les ressources de stockage agrégées pour former le nuage de données restent physiquement sur les postes informatiques contributeurs qui sont, pour tout ou partie, également des postes informatiques utilisateurs.

Le nuage de données privé ainsi obtenu s'apparente en fait à un nuage privé interne dont les ressources de stockage agrégées pour former le nuage de données, sont, en tout ou en partie, sous le contrôle direct des postes utilisateurs, c'est-à-dire du groupe d'utilisateurs. L'infrastructure du nuage de données est utilisée par le seul groupe d'utilisateurs identifiés. L'infrastructure du nuage de données est hébergée, en tout ou partie, chez le groupe d'utilisateurs identifiés. L'infrastructure du nuage de données est gérée, en tout ou partie, par le groupe d'utilisateurs identifiés.

Selon des modes de réalisation de l'invention, le nuage de données proposé offre à un groupe d'utilisateurs, une solution pour un espace de stockage en commun de données complètement contrôlé et sécurisé, avec un accès en partage simplifié.

Selon des modes de réalisation de l'invention, le nuage de données offre un accès aux services par les utilisateurs à la demande et/ou un accès par un réseau large bande, par exemple en étant raccordé directement par internet, et/ou un réservoir relativement important de ressources de stockage en commun, et/ou un réservoir rapidement évolutif de ressources de stockage en commun, et/ou une facturation aux utilisateurs à l'usage, avantageusement particulièrement réduite puisque les ressources de stockage en commun formant le nuage de données sont ici fournies, en tout ou en partie, par les postes informatiques utilisateurs eux-mêmes.

Selon des modes de réalisation de l'invention, le nuage de données réalise un stockage des données qui est orienté objet.

A cette fin, la présente invention propose un nuage de données selon la revendication 1, un procédé d'utilisation dudit nuage selon la revendication 16 ainsi qu'un procédé de construction dudit nuage selon la revendication 17.

Les ressources de stockage en commun sont fonctionnellement agrégées en un espace de stockage commun, tout en restant physiquement réparties sur leurs postes informatiques contributeurs d'origine.

Les données stockées sur les ressources de stockage mises en commun peuvent être partagées, au moins en accès, avantageusement par tous les postes informatiques utilisateurs du nuage. Tous les postes informatiques utilisateurs du nuage peuvent avantageusement stocker des données en commun, mais ne sont pas obligés de le faire. Certains des, préférentiellement la majorité des, encore plus préférentiellement tous les, postes informatiques du nuage, sont à la fois utilisateurs et contributeurs.

A cette fin, la présente invention propose aussi un procédé d'utilisation d'un nuage de données comprenant un accès, à des données stockées en commun dans le nuage, par des postes informatiques utilisateurs dont au moins certains sont également postes informatiques contributeurs c'est-à-dire qu'ils stockent sur leurs ressources de stockage au moins une partie de ces données stockées en commun.

A cette fin, la présente invention propose également un procédé de construction d'un nuage de données comprenant : un stockage en commun de données, par des postes informatiques utilisateurs, sur des ressources de stockage mises en commun par des postes informatiques contributeurs, un accès partagé, auxdites données stockées en commun, par lesdits postes informatiques utilisateurs, caractérisé en ce que plusieurs desdits postes informatiques utilisateurs sont aussi des postes informatiques contributeurs.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets précédemment cités.

De préférence, tous lesdits postes informatiques utilisateurs sont aussi des postes informatiques contributeurs et/ou tous lesdits postes informatiques contributeurs sont aussi des postes informatiques utilisateurs. Le fait que l'ensemble des postes informatiques contributeurs soit aussi des postes informatiques utilisateurs donne un contrôle total de l'hébergement physique des données au groupe d'utilisateurs. Le fait que l'ensemble des postes informatiques utilisateurs soit aussi des postes informatiques contributeurs répartit plus uniformément la charge de mise à disposition des ressources de stockage en commun.

De préférence, chaque fichier desdites données stockées est stocké entièrement sur les ressources de stockage d'au moins deux postes informatiques contributeurs différents. Ainsi, une redondance minimale est assurée pour tous les fichiers stockés, ce qui offre une accessibilité accrue et ce qui garantit leur restauration en cas d'endommagement ou de perte sur la ressource de stockage de l'un des postes contributeurs.

De préférence, chaque fichier desdites données stockées est stocké entièrement sur les ressources de stockage d'un nombre de postes informatiques contributeurs différents compris entre 2 et 5. C'est un bon compromis entre volume supplémentaire requis pour la redondance et efficacité de cette redondance.

De préférence, chaque fichier desdites données stockées est stocké entièrement sur les ressources de stockage d'un nombre $N_{min}$ de postes informatiques contributeurs différents qui vaut : $N_{min} = \dfrac{\sqrt[3]{U}}{F}$ , avec U le nombre total de postes informatiques utilisateurs, $F = \dfrac{\sum Fi}{U}$, Fi étant la fiabilité de chaque poste informatique utilisateur comprise entre 0 et 1 qui est le pourcentage de temps où ce poste informatique utilisateur est activé, avec $N_{min}$ arrondi à l'entier le plus proche ou bien à un entier contigu à cet entier le plus proche, avec $N_{min}$ valant au minimum 2 ou de préférence au minimum 3 quelles que soient les valeurs de U et de F. Le compromis réalisé entre d'une part efficacité de la redondance et d'autre part volume supplémentaire de stockage requis par cette redondance est ainsi optimisé.

Dans une autre option alternative, chaque fichier desdites données stockées est stocké entièrement sur des ressources de stockage d'au moins plusieurs postes informatiques contributeurs différents, le nombre desdits postes informatiques contributeurs différents stockant entièrement un même fichier de données étant compris entre l'entier inférieur ou égal à la racine carrée du nombre total de postes informatiques contributeurs et l'entier supérieur ou égal à la moitié du nombre total de postes informatiques contributeurs.

De préférence, le nombre total de postes informatiques utilisateurs est compris entre 5 et 20, et/ou le nombre total de postes informatiques contributeurs est compris entre 5 et 20. Une communauté d'utilisateurs de taille réduite trouvera un bénéfice particulier dans l'utilisation du nuage de données proposé par l'invention, dans la mesure où, dans les arts antérieurs connus, pratiquement aucun type de nuage de données intéressant n'est adapté à cette taille de communauté d'utilisateurs.

L'ensemble des postes informatiques utilisateurs d'un nuage correspond à une communauté d'utilisateurs. Cette communauté d'utilisateurs peut correspondre par exemple à un groupe de membres d'une même famille, à un groupe d'amis, à une petite entreprise, ou à un groupe de travail dans une grande entreprise. Cette communauté d'utilisateurs peut également correspondre à un groupe d'utilisateurs de grande taille, comme par exemple une grande entreprise ou même tout autre type de communauté, et dépasser la centaine d'utilisateurs, voire le millier d'utilisateurs, voire beaucoup plus si besoin.

De préférence, le ou tous les postes informatiques administrateurs du nuage sont également des postes informatiques utilisateurs. Ainsi, le groupe des utilisateurs conserve non seulement le contrôle de l'hébergement physique des données stockées en commun dans le nuage, mais également le contrôle de la gestion de ce nuage. Le contrôle du nuage par le groupe d'utilisateurs se trouve alors être maximisé.

De préférence, à taille égale de ressources de stockage mises en commun par deux postes informatiques contributeurs dont l'un est plus souvent activé que l'autre, le volume desdites données stockées sur le poste informatique contributeur plus souvent activé est strictement supérieur au volume desdites données stockées sur le poste informatique contributeur moins souvent activé. Un poste informatique contributeur plus souvent activé est un poste plus souvent allumé et donc plus accessible par d'autres postes informatiques utilisateurs.

De préférence, à taille égale de volume de données entre deux fichiers de données stockées dont l'un est plus souvent consulté que l'autre par les postes informatiques utilisateurs, le fichier de données stockées plus souvent consulté est entièrement stocké sur autant ou plus de postes informatiques contributeurs que le fichier de données stockées moins souvent consulté, au moins certains des fichiers de données stockées plus souvent consultés étant stockés sur strictement plus de postes informatiques contributeurs que d'autres fichiers de données stockées moins souvent consultés de taille similaire. Les fichiers de données stockés en commun les plus consultés sont supposés être les plus importants et/ou les plus intéressants. Une redondance encore plus robuste est alors pratiquée pour ces fichiers.

De préférence, les postes informatiques contributeurs mettant en commun moins de ressources de stockage stockent, sur leurs ressources de stockage mises en commun, en proportion relative, plus de données que les postes informatiques contributeurs mettant en commun plus de ressources de stockage. Ainsi, la redondance peut être augmentée, pour un même volume supplémentaire global de ressources de stockage utilisées dans le nuage de données pour réaliser cette redondance. Cela permet en effet de mieux distribuer les données entre postes informatiques contributeurs, de manière à ce que chaque fichier de données soit stocké sur plusieurs postes informatiques contributeurs, voire si besoin sur de nombreux postes informatiques contributeurs.

De préférence, les données personnelles d'un poste informatique utilisateur étiquetées comme données personnelles sensibles sont dupliquées sur des ressources de stockage mises en commun sur au moins un poste contributeur différent dudit poste informatique utilisateur, sans devenir accessibles aux autres postes informatiques utilisateurs, pas même au poste informatique utilisateur qui serait éventuellement aussi le poste informatique contributeur sur lequel lesdites données sensibles personnelles sont dupliquées. Une sauvegarde de type sauvegarde sur serveur est ainsi offerte à chaque poste utilisateur, tout en maintenant une confidentialité complète de ces données personnelles sensibles.

De préférence, ce nuage de données est un nuage de catégorie infrastructure comme un service pour les postes informatiques utilisateurs. Un nuage de catégorie infrastructure comme un service (« Infrastructure as a Service » ou « IaaS » en langue anglaise) est un nuage pour lequel les utilisateurs ne gèrent pas et ne contrôlent pas l'infrastructure sous-jacente du nuage. En revanche, les utilisateurs ont le contrôle sur les systèmes d'exploitation, sur le stockage et sur les applications, ainsi qu'avantageusement sur les capacités réseaux, les partages de charge, les pare-feu et les caches.

De préférence, chaque poste informatique utilisateur peut accéder au nuage par l'intermédiaire d'une connexion internet. L'accessibilité du nuage de données aux utilisateurs est ainsi encore facilitée.

De préférence, chaque poste informatique utilisateur héberge un morceau de la partie client du nuage, chaque poste informatique contributeur héberge un morceau de la partie serveur du nuage, chaque poste informatique utilisateur et contributeur héberge un morceau de la partie client du nuage et un morceau de la partie serveur du nuage.

De préférence, l'accès auxdites données stockées est strictement interdit à tout poste informatique qui n'est pas identifié comme poste informatique utilisateur de ce nuage ou qui n'est pas identifié comme poste informatique administrateur de ce nuage. Ainsi, la sécurité du nuage de données, notamment par rapport aux malveillances ou même par rapport à des erreurs, est encore améliorée. En option alternative, les postes informatiques non identifiés pourraient avoir des droits d'accès très limités, comme par exemple une pure consultation passive sans possibilité de duplication informatique.

Un ou plusieurs postes informatiques administrateurs gèrent et contrôlent le nuage de données. Ce ou ces postes informatiques administrateurs ont bien sûr accès aux données stockées, en tant qu'administrateurs. Ce ou ces administrateurs sont bien sûr des personnes de confiance pour le groupe d'utilisateurs.

De préférence, la gestion du nuage de données est effectuée, au moins temporairement au début, par un ou plusieurs postes informatiques administrateurs qui ne sont pas postes informatiques utilisateurs. De cette manière, même un groupe d'utilisateurs limité et/ou néophyte peut profiter de tous les avantages relatifs à un nuage de données, sans les capitaux ni le savoir-faire nécessaires à la mise en place d'un nuage de données, tout en conservant un contrôle complet ou partiel sur l'hébergement physique des données stockées en commun.

Au lieu de donner au groupe d'utilisateurs plus ou moins de contrôle sur la gestion du nuage de données tout en maintenant hors de sa portée le contrôle sur l'hébergement physique des données stockées en commun, comme dans certains nuages de données du deuxième art antérieur, un contrôle total sur l'hébergement physique des données stockées en commun est ici donné, tandis qu'une aide, plus ou moins grande, est tout de même apportée à la mise en place et à la gestion du nuage de données.

D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES DESSINS

La figure 1 représente schématiquement un exemple de réalisation d'un nuage de données selon un mode de réalisation de l'invention.
La figure 2 représente schématiquement un exemple de construction et d'utilisation d'un nuage de données selon un mode de réalisation de l'invention.

DESCRIPTION DETAILLEE DE L'INVENTION

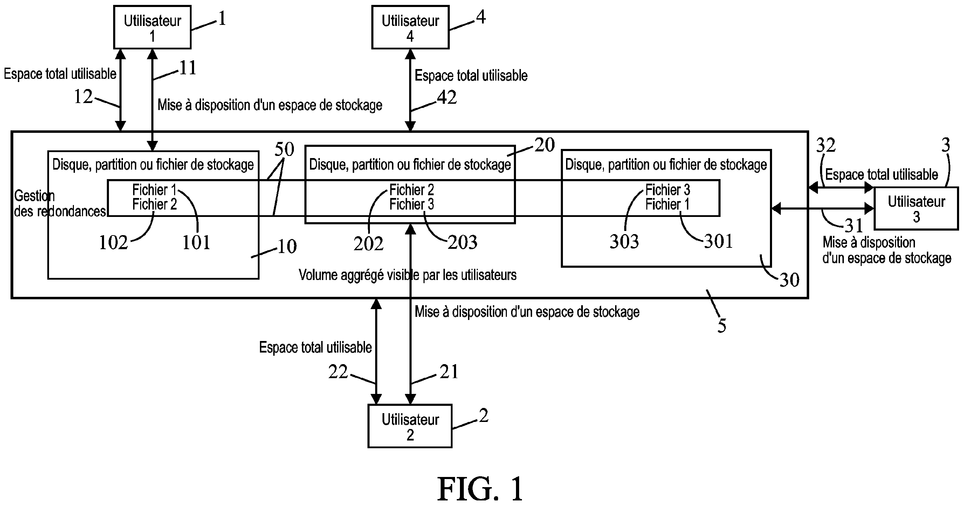

La figure 1 représente schématiquement un exemple de réalisation d'un nuage de données selon un mode de réalisation de l'invention. L'exemple de nuage de données décrit n'intègre que quatre postes informatiques pour la simplicité de description, mais en réalité, un nuage de données agrégeant les ressources de stockage de 5 à 20 postes informatiques est préféré, et un nuage de données agrégeant les ressources de stockage de de plusieurs centaines ou même de plusieurs milliers de postes informatiques est envisageable. Les postes informatiques peuvent aussi être appelés des noeuds.

Quatre utilisateurs possèdent respectivement quatre postes informatiques 1, 2, 3 et 4. Les postes informatiques 1 à 4 sont tous des postes informatiques utilisateurs, car ils vont stocker des données en commun pour les partager, c'est-à-dire pour pouvoir y accéder de manière partagée. Seuls les postes informatiques 1 à 3 sont des postes informatiques contributeurs, car seuls les postes informatiques 1 à 3 mettent en commun une partie de leurs ressources de stockage. Le poste informatique 4 n'est pas un poste informatique contributeur. Les postes informatiques 1 à 3 sont des postes informatiques utilisateurs et contributeurs, tandis que le poste informatique 4 est seulement un poste informatique utilisateur.

Le poste informatique utilisateur et contributeur 1 met à disposition du nuage de données fonctionnellement une partie de ses ressources de stockage qu'il va conserver physiquement, par l'intermédiaire d'une opération de mise à disposition 11 de ressource stockage 10. Le poste informatique utilisateur et contributeur 1 met en commun une ressource de stockage 10, par exemple un disque de stockage ou une partition d'un disque de stockage ou un fichier de stockage. De la même manière, le poste informatique utilisateur et contributeur 2 met en commun une ressource de stockage 20, par l'intermédiaire d'une opération de mise à disposition 21 de ressource stockage 20, et le poste informatique utilisateur et contributeur 3 met en commun une ressource de stockage 30, par l'intermédiaire d'une opération de mise à disposition 31 de ressource stockage 30.

L'espace commun de stockage constitué par la réunion des ressources de stockage 10, 20 et 30, constitue fonctionnellement l'ensemble commun des ressources de stockage du nuage 5 de données, les ressources de stockage 10, 20 et 30, restant physiquement respectivement sur les postes informatiques contributeurs 1, 2 et 3. Cet espace commun de stockage est constitué par l'agrégation des ressources de stockage 10, 20 et 30. Cependant la gestion et le contrôle des ressources de stockage 10, 20 et 30, échappe aux postes informatiques contributeurs 1, 2 et 3. La gestion et le contrôle des ressources de stockage 10, 20 et 30, est effectuée par le nuage 5 de données, et notamment par les administrateurs du nuage 5 de données qui ne sont pas représentés sur la figure 1 pour des raisons de simplicité.

Tous les postes informatiques utilisateurs, c'est-à-dire les postes informatiques 1 à 4, peuvent stocker des données dans ce nuage 5 de données. Supposons par exemple que l'utilisateur 1 du poste informatique 1 veuille stocker un fichier 1, que l'utilisateur 2 du poste informatique 2 veuille stocker un fichier 2, que l'utilisateur 3 du poste informatique 3 veuille stocker un fichier 3. Tous les postes informatiques 1 à 3 vont demander au nuage 5 de données de stocker respectivement leurs fichiers 1 à 3.

Pour augmenter la disponibilité et la sécurité des fichiers 1 à 3, le nuage 5 de données va, non pas seulement les stocker sur une ressource de stockage, appartenant à un premier poste informatique contributeur, mais encore les dupliquer sur une autre ressource de stockage, appartenant à un second poste informatique contributeur. Le nuage 5 de données va assurer une certaine redondance dans le stockage de ces fichiers. Cette redondance dans le stockage des fichiers est mise en place pour pallier l'inconvénient lié à la déconnexion d'un ou de plusieurs postes informatiques contributeurs, ainsi qu'une éventuelle détérioration d'un fichier au niveau de son emplacement dans l'une des ressources de stockage.

La redondance est symbolisée sur la figure 1 par la zone 50 où l'on peut constater que les différents fichiers sont stockés chacun deux fois. Par exemple, le fichier 1 est stocké d'une part à l'emplacement 101 sur la ressource de stockage 10 du poste informatique 1 et d'autre part à l'emplacement 301 sur la ressource de stockage 30 du poste informatique 3. De cette manière, si le poste informatique 1 est inactif, c'est-à-dire éteint, le fichier 1 est encore accessible à l'emplacement 301 sur la ressource 30 du poste informatique 3 si celui-ci est actif, c'est-à-dire allumé, et vice-et-versa.

De manière similaire, par exemple, le fichier 2 est stocké d'une part à l'emplacement 102 sur la ressource de stockage 10 du poste informatique 1 et d'autre part à l'emplacement 202 sur la ressource de stockage 20 du poste informatique 2, tandis que le fichier 3 est stocké d'une part à l'emplacement 203 sur la ressource de stockage 20 du poste informatique 2 et d'autre part à l'emplacement 303 sur la ressource de stockage 30 du poste informatique 3.

Cette redondance peut être finement gérée, en fonction notamment, de la capacité de chaque ressource de stockage mise en commun par chaque poste informatique contributeur, en fonction du nombre total de postes informatiques utilisateurs, et/ou en fonction des statistiques d'utilisation, par les postes informatiques utilisateurs, des données stockées en commun dans le nuage de données.

Chaque fichier desdites données stockées est stocké entièrement sur les ressources de stockage d'un certain nombre $N_{min}$ de postes informatiques contributeurs différents. Ce nombre $N_{min}$ est par exemple compris entre 2 et 5.

Préférentiellement, ce nombre $N_{min}$ vaut :

$$N_{min} = \frac{\sqrt[3]{U}}{F} N_{min}$$ (arrondi à l'entier le plus proche ou à un entier juste voisin de cet entier le plus proche), avec $N_{min}$ valant au minimum 2 ou bien $N_{min}$ valant avantageusement au minimum 3 quel que soit le nombre de postes informatiques utilisateurs et quelle que soit leur fiabilité, avec $N_{min}$ qui est en fait le nombre d'occurrences du fichier, c'est-à-dire le nombre d'endroits différents où ce fichier est entièrement stocké, U qui est le nombre total de postes informatiques utilisateurs, F qui est la fiabilité moyenne de l'ensemble du système, chaque poste informatique utilisateur disposant d'une fiabilité comprise entre 0 et 1 (0 si le poste informatique utilisateur n'est jamais activé, 1 si le poste informatique utilisateur est toujours activé, 0,5 si le poste informatique utilisateur est activé la moitié du temps, etc ...), la fiabilité moyenne F de l'ensemble du système est la moyenne des fiabilités individuelles Fi de chaque poste informatique utilisateur i : $F = \frac{\sum Fi}{U}$ .

Tous les postes informatiques utilisateurs 1 à 4 peuvent accéder à l'ensemble des fichiers 1 à 3, c'est-à-dire à l'ensemble des ressources de stockage 10, 20 et 30, qui ont été agrégés au sein du nuage 5 de données. Cet accès permet par exemple de lire ou de copier le fichier accédé. Si deux postes informatiques utilisateurs, par exemple les postes informatiques 1 et 4, veulent accéder simultanément au fichier 3, le poste informatique 1 pourra le consulter à l'emplacement 203 sur la ressource de stockage 20 du poste informatique 2, tandis que le poste informatique 4 pourra le consulter à l'emplacement 303 sur la ressource de stockage 30 du poste informatique 3, à condition que les postes informatiques 2 et 3 soient actifs. En option alternative, certains postes informatiques utilisateurs pourraient se voir affecter une accessibilité réduite, par exemple à une certaine catégorie de fichiers seulement.

Si la copie du fichier 1 est endommagée à l'emplacement 101 sur la ressource 10 du poste informatique 1, elle pourra être restaurée en utilisant la copie intacte du fichier 1 stockée à l'emplacement 301 sur la ressource 30 du poste informatique 3, et vice-et-versa.

Le nuage 5 de données est évolutif. A certaines périodes, l'un des postes informatiques peut avoir de gros besoins de stockage et peu de ressources de stockage à mettre à disposition, tandis qu'un autre des postes informatiques aura peu de besoins de stockage et beaucoup de ressources de stockage à mettre à disposition, et vice-et-versa à d'autres périodes.

Par exemple à un premier moment, le poste informatique 1 met en commun une ressource de stockage 10 d'une capacité de 100Go et n'a besoin de stocker que 20Go de données, tandis que le poste informatique 2 met en commun une ressource de stockage 20 d'une capacité de 20Go mais a besoin de stocker que 30Go de données. Avec le nuage 5 de données, c'est possible, car celui-ci dispose de 120Go, et n'a besoin de stocker que 100Go de données (2 fois 50Go de données à stocker à cause de la redondance). Dans ce cas, sans participation au nuage 5 de données, le poste informatique 2 n'aurait pas pu stocker toutes ses données, tandis que le poste informatique 1 aurait eu beaucoup de ressource de stockage inutilisée.

Inversement, par exemple à un deuxième moment, le poste informatique 1 ne peut plus mettre en commun qu'une ressource de stockage 10 d'une capacité de 50Go mais a alors besoin de stocker 60Go de données, tandis que le poste informatique 2 peut mettre en commun une ressource de stockage 20 d'une capacité de 150Go tout en n'ayant plus besoin de stocker que 20Go de données. Avec le nuage 5 de données, c'est encore possible, car celui-ci dispose de 200Go, et n'a besoin de stocker que 160Go de données (2 fois 80Go de données à stocker à cause de la redondance). Dans cet autre cas, sans participation au nuage 5 de données, le poste informatique 1 n'aurait pas pu stocker toutes ses données, tandis que le poste informatique 2 aurait eu beaucoup de ressource de stockage inutilisée.

Hormis les postes informatiques 1 à 4 appartenant au groupe d'utilisateurs identifiés du nuage 5 de données, et à l'exception des postes informatiques administrateurs de ce nuage 5 de données, personne ne peut accéder aux données stockées en commun dans ce nuage 5 de données, sauf nouveau poste informatique entrant, dûment autorisé et identifié. Les données stockées peuvent être des textes, des photos, des vidéos, des présentations, etc ...

Si le poste informatique 1 identifie un fichier comme données personnelles sensibles à sauvegarder, le nuage 5 de données peut le copier sur la ressource de stockage 10 du poste informatique 1 et la dupliquer sur la ressource de stockage 30 du poste informatique 3, sans qu'aucun des postes informatiques autres que le poste informatique 1 puisse y accéder, et pas même le poste informatique 3. Le nuage 5 de données offre alors une sauvegarde de type « sauvegarde serveur » au poste informatique 1 pour son fichier de données personnelles sensibles, tout en maintenant une confidentialité totale à l'égard des autres postes informatiques 2 à 4 qui ne peuvent pas y accéder et qui peuvent même en ignorer l'existence. Pour ne pas trop impacter l'espace commun de données à partager, une telle offre peut être limitée à un certain quota de capacité de stockage de type sauvegarde confidentielle pour chaque poste informatique.

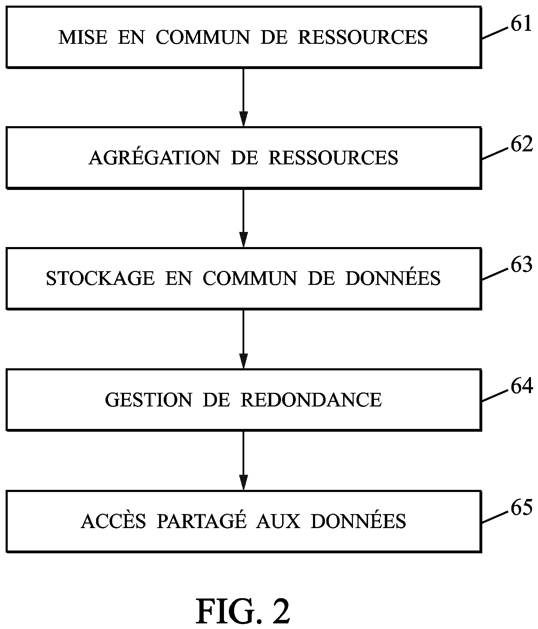

La figure 2 représente schématiquement un exemple de construction et d'utilisation d'un nuage de données selon un mode de réalisation de l'invention. Plusieurs étapes de construction vont être successivement réalisées permettant ensuite le déroulement de l'étape d'utilisation.

D'abord, dans une première étape de construction, étape de mise en commun 61 de ressources par les différents postes informatiques contributeurs, chaque poste informatique contributeur définit soit un disque dur entier ou plusieurs, soit une partition limitée d'un disque dur ou plusieurs, soit même un ou plusieurs simples fichiers de stockage, en tant que ressource de stockage mise en commun, c'est-à-dire mise à disposition du nuage de données. Cette ressource de stockage mise à disposition constitue un nouveau noeud disponible, soit pour être ajouté dans un volume existant de ressources de stockage, soit pour participer à la création d'un nouveau volume de ressources de stockage.

Ensuite, dans une deuxième étape de construction, étape d'agrégation 62 de toutes les ressources mises en commun, pour constituer fonctionnellement un espace commun de stockage lequel est physiquement distribué ou réparti sur les différents postes informatiques contributeurs.

Puis, dans une troisième étape de construction, étape de stockage en commun 63 de données, les différents postes informatiques utilisateurs demandant le stockage en commun des données qu'ils veulent partager entre eux.

Puis, dans une quatrième étape de construction, étape de gestion de redondance 64, effectuée par les administrateurs du nuage de données, les données à stocker en commun sont stockées sur un poste informatique contributeur et dupliquées au moins sur un autre voire sur plusieurs autres postes informatiques contributeurs, selon différents critères déjà exposés précédemment. Cette redondance assure d'une part une meilleure disponibilité des données stockées en commun en cas de déconnexion d'un ou de plusieurs postes informatiques contributeurs, et d'autre part une meilleure sécurité des données stockées en commun en cas de dégradation ou de perte de données stockées sur un des postes informatiques contributeurs.

Enfin, dans une étape d'utilisation, étape 65 d'accès partagé aux données, l'ensemble des postes utilisateurs peut consulter et copier toutes les données stockées en commun dans le nuage de données. Pendant cette étape d'utilisation, la construction du nuage de données peut être continuée ou modifiée, c'est-à-dire par exemple que de nouvelles données peuvent être stockées ou effacées, de nouvelles ressources de stockage peuvent être mises à disposition ou retirées par des postes informatiques contributeurs, de nouveaux postes informatiques contributeurs et/ou utilisateurs peuvent être ajoutés au nuage de données ou retirés du nuage de données.

Bien entendu, la présente invention n'est pas limitée aux exemples et au mode de réalisation décrits et représentés, mais elle est susceptible de nombreuses variantes accessibles à l'homme de l'art.

## Revendications

1. Nuage de données comprenant :

   - des postes informatiques contributeurs (1 à 3) mettant au moins une partie de leurs ressources de stockage (10, 20, 30) qu'ils vont conserver physiquement, par l'intermédiaire d'une opération de mise à disposition de ressource de stockage, en commun dans le nuage (5),
   - des postes informatiques utilisateurs (1 à 4) stockant des données sur lesdites ressources de stockage (10, 20, 30) mises en commun dans le nuage de manière à partager entre eux l'accès auxdites données stockées, selon lequel plusieurs desdits postes informatiques utilisateurs (1 à 4) sont également des postes informatiques contributeurs (1 à 3).

**2.** Nuage de données selon la revendication 1, **caractérisé en ce que** tous lesdits postes informatiques utilisateurs (1 à 4) sont aussi des postes informatiques contributeurs (1 à 3) et/ou tous lesdits postes informatiques contributeurs (1 à 3) sont aussi des postes informatiques utilisateurs (1 à 4).

**3.** Nuage de données selon l'une quelconque des revendications précédentes, **caractérisé en ce que** chaque fichier desdites données stockées est stocké entièrement sur les ressources de stockage (10, 20, 30) d'au moins deux postes informatiques contributeurs différents (1 à 3).

**4.** Nuage de données selon la revendication 3, **caractérisé en ce que** chaque fichier desdites données stockées est stocké entièrement sur les ressources de stockage (10, 20, 30) d'un nombre de postes informatiques contributeurs (1 à 3) différents compris entre 2 et 5.

**5.** Nuage de données selon la revendication 3 ou 4, **caractérisé en ce que** :

- chaque fichier desdites données stockées est stocké entièrement sur les ressources de stockage (10, 20, 30) d'un nombre $N_{min}$ de postes informatiques contributeurs (1 à 3) différents qui

vaut : $N_{min} = \dfrac{\sqrt[3]{U}}{F}$ ,

avec U le nombre total de postes informatiques utilisateurs (1 à 4), $F = \dfrac{\sum Fi}{U}$, Fi étant la fiabilité de chaque poste informatique utilisateur (1 à 4) comprise entre 0 et 1 qui est le pourcentage de temps où ce poste informatique utilisateur (1 à 4) est activé,
avec $N_{min}$ arrondi à l'entier le plus proche ou bien à un entier contigu à cet entier le plus proche,
avec $N_{min}$ valant au minimum 2 ou de préférence au minimum 3 quelles que soient les valeurs de U et de F.

**6.** Nuage de données selon l'une quelconque des revendications précédentes, **caractérisé en ce que** le nombre total de postes informatiques utilisateurs (1 à 4) est compris entre 5 et 20, et/ou le nombre total de postes informatiques contributeurs (1 à 3) est compris entre 5 et 20.

**7.** Nuage de données selon l'une quelconque des revendications précédentes, **caractérisé en ce que** le ou tous les postes informatiques administrateurs du nuage sont également des postes informatiques utilisateurs (1 à 4).

**8.** Nuage de données selon l'une quelconque des revendications précédentes, **caractérisé en ce que**, à taille égale de ressources de stockage (10, 20, 30) mises en commun par deux postes informatiques contributeurs (1 à 3) dont l'un est plus souvent activé que l'autre, le volume desdites données stockées sur le poste informatique contributeur (1 à 3) plus souvent activé est strictement supérieur au volume desdites données stockées sur le poste informatique contributeur (1 à 3) moins souvent activé.

**9.** Nuage de données selon l'une quelconque des revendications précédentes, **caractérisé en ce que**, à taille égale de volume de données entre deux fichiers de données stockées dont l'un est plus souvent consulté que l'autre par les postes informatiques utilisateurs (1 à 4), le fichier de données stockées plus souvent consulté est entièrement stocké sur autant ou plus de postes informatiques contributeurs (1 à 3) que le fichier de données stockées moins souvent consulté, au moins certains des fichiers de données stockées plus souvent consultés étant stockés sur strictement plus de postes informatiques contributeurs (1 à 3) que d'autres fichiers de données stockées moins souvent consultés de taille similaire.

**10.** Nuage de données selon l'une quelconque des revendications précédentes, **caractérisé en ce que** les postes informatiques contributeurs (1 à 3) mettant en commun moins de ressources de stockage (10, 20, 30) stockent, sur leurs ressources de stockage (10, 20, 30) mises en commun, en proportion relative, plus de données que les postes informatiques contributeurs (1 à 3) mettant en commun plus de ressources de stockage (10, 20, 30).

**11.** Nuage de données selon l'une quelconque des revendications précédentes, **caractérisé en ce que** les données personnelles d'un poste informatique utilisateur (1 à 4) étiquetées comme données personnelles sensibles sont dupliquées sur des ressources de stockage (10, 20, 30) mises en commun sur au moins un poste contributeur (1 à 3) différent dudit poste informatique utilisateur (1 à 4), sans devenir accessibles aux autres postes informatiques utilisateurs (1 à 4), pas même au poste informatique utilisateur (1 à 4) qui serait éventuellement aussi le poste informatique contributeur (1 à 3) sur lequel lesdites données sensibles personnelles sont dupliquées.

**12.** Nuage de données selon l'une quelconque des revendications précédentes, **caractérisé en ce que** ce nuage (5) de données est un nuage de catégorie infrastructure comme un service pour les postes informatiques utilisateurs (1 à 4).

**13.** Nuage de données selon l'une quelconque des revendications précédentes, **caractérisé en ce que** chaque poste informatique utilisateur (1 à 4) peut accéder au nuage (5) par l'intermédiaire d'une connexion internet.

**14.** Nuage de données selon l'une quelconque des revendications précédentes, **caractérisé en ce que** :

- chaque poste informatique utilisateur (1 à 4) héberge un morceau de la partie client du nuage (5),
- chaque poste informatique contributeur (1 à 3) héberge un morceau de la partie serveur du nuage (5),
- chaque poste informatique utilisateur et contributeur (1 à 3) héberge un morceau de la partie client du nuage (5) et un morceau de la partie serveur du nuage (5).

**15.** Nuage de données selon l'une quelconque des revendications précédentes, **caractérisé en ce que** l'accès auxdites données stockées est strictement interdit à tout poste informatique qui n'est pas identifié comme poste informatique utilisateur (1 à 4) de ce nuage (5) ou qui n'est pas identifié comme poste informatique administrateur de ce nuage (5).

**16.** Procédé d'utilisation d'un nuage de données comprenant un accès, à des données stockées en commun dans le nuage (5), par des postes informatiques utilisateurs (1 à 4) dont au moins certains sont également postes informatiques contributeurs (1 à 3) c'est-à-dire qu'ils stockent sur leurs ressources de stockage (10, 20, 30) au moins une partie de ces données stockées en commun.
dans le nuage;
lesdits postes contributeurs mettant au moins une partie de leurs ressources de stockage, qu'ils vont conserver physiquement, par l'intermédiaire d'une opération de mise à disposition de ressource de stockage, en commun.

**17.** Procédé de construction d'un nuage de données comprenant :

- un stockage en commun (63) de données, par des postes informatiques utilisateurs (1 à 4), sur des ressources de stockage (10, 20, 30) dans le nuage mises en commun par des postes informatiques contributeurs (1 à 3), lesdits postes contributeurs mettant au moins une partie de leurs ressources de stockage, qu'ils vont conserver physiquement, par l'intermédiaire d'une opération de mise à disposition de ressource de stockage, en commun,
- un accès partagé (65), auxdites données stockées en commun, par lesdits postes informatiques utilisateurs (1 à 4), selon lequel plusieurs desdits postes informatiques utilisateurs (1 à 4) sont également des postes informatiques contributeurs (1 à 3).

**18.** Procédé de construction d'un nuage de données selon la revendication précédente, **caractérisé en ce que** la gestion du nuage (5) de données est effectuée, au moins temporairement au début, par un ou plusieurs postes informatiques administrateurs qui ne sont pas postes informatiques utilisateurs.

**Patentansprüche**

**1.** Daten-Cloud, die enthält :

- Mitwirkende-Computerarbeitsplätze (1 bis 3), die mindestens einen Teil ihrer Speicherressourcen (10, 20, 30) in der Cloud (5) gemeinsam nutzen,
- Nutzer-Computerarbeitsplätze (1 bis 4), die Daten in den gemeinsam genutzten Speicherressourcen (10, 20, 30) speichern, um den Zugang zu den gespeicherten Daten miteinander zu teilen,

**dadurch gekennzeichnet, dass** mehrere der Nutzer-Computerarbeitsplätze (1 bis 4) auch Mitwirkende-Computerarbeitsplätze (1 bis 3) sind.

**2.** Daten-Cloud nach Anspruch 1, **dadurch gekennzeichnet, dass** alle Nutzer-Computerarbeitsplätze (1 bis 4) auch Mitwirkende-Computerarbeitsplätze (1 bis 3) und/oder alle Mitwirkende-Computerarbeitsplätze (1 bis 3) auch Nutzer-Computerarbeitsplätze (1 bis 4) sind.

**3.** Daten-Cloud nach einem der vorhergehenden Ansprüche, **dadurch gekennzeichnet, dass** jede Datei der gespeicherten Daten vollständig in den Speicherressourcen (10, 20, 30) von mindestens zwei verschiedenen Mitwirkenden-Computerarbeitsplätzen (1 bis 3) gespeichert wird.

**4.** Daten-Cloud nach Anspruch 3, **dadurch gekennzeichnet, dass** jede Datei der gespeicherten Daten vollständig in den Speicherressourcen (10, 20, 30) einer Anzahl von zwischen 2 und 5 verschiedenen Mitwirkenden-Computerarbeitsplätzen (1 bis 3) gespeichert wird.

**5.** Daten-Cloud nach Anspruch 3 oder 4, **dadurch gekennzeichnet, dass** :

- jede Datei der gespeicherten Daten vollständig in den Speicherressourcen (10, 20, 30) einer An-

zahl $N_{min}$ von verschiedenen Mitwirkenden-Computerarbeitsplätzen (1 bis 3) gespeichert wird, die gleich :

$$N_{min} = \frac{\sqrt[U]{U}}{F}$$ ist,

mit U der Gesamtzahl von Nutzer-Computerarbeitsplätzen (1 bis 4), $F = \frac{\sum Fi}{U}$, wobei $Fi$ die Zuverlässigkeit eines jeden Nutzer-Computerarbeitsplatzes (1 bis 4) zwischen 0 und 1 ist, die der Prozentangabe der Zeit entspricht, währenddessen dieser Nutzer-Computerarbeitsplatz (1 bis 4) aktiviert ist, mit $N_{min}$ auf die nächstliegende ganze Zahl oder auch auf eine an diese nächstliegende ganze Zahl angrenzende ganze Zahl abgerundet, mit $N_{min}$, das mindestens 2 oder vorzugsweise mindestens 3 gleicht, unabhängig von den Werten von U und von F.

6. Daten-Cloud nach einem der vorhergehenden Ansprüche, **dadurch gekennzeichnet, dass** die Gesamtzahl von Nutzer-Computerarbeitsplätzen (1 bis 4) zwischen 5 und 20 liegt, und/oder die Gesamtzahl von Mitwirkenden-Computerarbeitsplätzen (1 bis 3) zwischen 5 und 20 liegt.

7. Daten-Cloud nach einem der vorhergehenden Ansprüche, **dadurch gekennzeichnet, dass** der oder alle Administrator-Computerarbeitsplätze der Cloud ebenfalls Nutzer-Computerarbeitsplätze (1 bis 4) sind.

8. Daten-Cloud nach einem der vorhergehenden Ansprüche, **dadurch gekennzeichnet, dass** bei gleicher Größe von durch zwei Mitwirkenden-Computerarbeitsplätze (1 bis 3) gemeinsam genutzter Speicherressourcen (10, 20, 30), von denen einer öfter aktiviert wird als der andere, das Volumen der im häufiger aktivierten Mitwirkende-Computerarbeitsplatz (1 bis 3) gespeicherten Daten strikt größer ist als das Volumen der im weniger häufig aktivierten Mitwirkende-Computerarbeitsplatz (1 bis 3) gespeicherten Daten.

9. Daten-Cloud nach einem der vorhergehenden Ansprüche, **dadurch gekennzeichnet, dass** bei gleicher Größe des Datenvolumens zwischen zwei Dateien gespeicherter Daten, von denen eine öfter als die andere durch die Nutzer-Computerarbeitsplätze (1 bis 4) abgefragt wird, die öfter abgefragte Datei gespeicherter Daten vollständig in ebenso vielen oder mehr Mitwirkenden-Computerarbeitsplätzen (1 bis 3) als die weniger häufig abgefragte Datei gespeicherter Daten gespeichert wird, wobei zumindest bestimmte der häufiger abgefragten Dateien gespeicherter Daten in strikt mehr Mitwirkenden-Computerarbeitsplätzen (1 bis 3) gespeichert werden als andere weniger häufig abgefragte Dateien gespeicherter Daten ähnlicher Größe.

10. Daten-Cloud nach einem der vorhergehenden Ansprüche, **dadurch gekennzeichnet, dass** die Mitwirkenden-Computerarbeitsplätze (1 bis 3) weniger Speicherressourcen (10, 20, 30) gemeinsam nutzen, wobei sie in ihren gemeinsam genutzten Speicherressourcen (10, 20, 30) in relativem Anteil mehr Daten speichern als die Mitwirkenden-Computerarbeitsplätze (1 bis 3), die mehr Speicherressourcen (10, 20, 30) gemeinsam nutzen.

11. Daten-Cloud nach einem der vorhergehenden Ansprüche, **dadurch gekennzeichnet, dass** die persönlichen Daten eines Nutzer-Computerarbeitsplatzes (1 bis 4), die als sensible persönliche Daten gekennzeichnet sind, in Speicherressourcen (10, 20, 30) dupliziert werden, die in mindestens einem Mitwirkenden-Computerarbeitsplatz (1 bis 3), die anders als der Nutzer-Computerarbeitsplatz (1 bis 4), gemeinsam genutzt werden, ohne dass sie für die anderen Nutzer-Computerarbeitsplätze (1 bis 4) zugänglich werden, nicht einmal für den Nutzer-Computerarbeitsplatz (1 bis 4), der ggf. auch der Mitwirkende-Computerarbeitsplatz (1 bis 3) wäre, in dem die sensiblen persönlichen Daten dupliziert werden.

12. Daten-Cloud nach einem der vorhergehenden Ansprüche, **dadurch gekennzeichnet, dass** diese Cloud (5) von Daten eine Cloud der Kategorie Infrastruktur ist, wie ein Dienst für die Nutzer-Computerarbeitsplätze (1 bis 4).

13. Daten-Cloud nach einem der vorhergehenden Ansprüche, **dadurch gekennzeichnet, dass** jeder Nutzer-Computerarbeitsplatz (1 bis 4) über eine Internetverbindung auf die Cloud (5) zugreifen kann.

14. Daten-Cloud nach einem der vorhergehenden Ansprüche, **dadurch gekennzeichnet, dass** :

- jeder Nutzer-Computerarbeitsplatz (1 bis 4) ein Stück des Client-Teils der Cloud (5) hostet,
- jeder Mitwirkende-Computerarbeitsplatz (1 bis 3) ein Stück des Server-Teils der Cloud (5) hostet,
- jeder Nutzer- und Mitwirkende-Computerarbeitsplatz (1 bis 3) ein Stück des Client-Teils der Cloud (5) und ein Stück des Server-Teils der Cloud (5) hostet.

15. Daten-Cloud nach einem der vorhergehenden Ansprüche, **dadurch gekennzeichnet, dass** der Zugang zu den gespeicherten Daten für jeden Computerarbeitsplatz verboten ist, der nicht als Nutzer-Computerarbeitsplatz (1 bis 4) dieser Cloud (5) erkannt wird oder der nicht als Administrator-Computerarbeitsplatz dieser Cloud (5) erkannt wird.

16. Verfahren zur Verwendung einer Daten-Cloud, die einen Zugang zu gemeinsam in dieser Cloud (5) gespeicherten Daten durch Nutzer-Computerarbeitsplätze (1 bis 4) enthält, von denen zumindest bestimmte auch Mitwirkende-Computerarbeitsplätze (1 bis 3) sind, d.h., dass sie in ihren Speicherressourcen (10, 20, 30) mindestens einen Teil dieser gemeinsam gespeicherten Daten speichern.

17. Verfahren zur Konstruktion einer Daten-Cloud, das enthält:

    - einen gemeinsamen Speicher (63) von Daten durch Nutzer-Computerarbeitsplätze (1 bis 4) in Speicherressourcen (10, 20, 30), die von Mitwirkende-Computerarbeitsplätzen (1 bis 3) gemeinsam genutzt werden,
    - einen gemeinsamen Zugang (65) zu den gemeinsam gespeicherten Daten durch die Nutzer-Computerarbeitsplätze (1 bis 4),

    **dadurch gekennzeichnet, dass** mehrere der Nutzer-Computerarbeitsplätze (1 bis 4) auch Mitwirkende-Computerarbeitsplätze (1 bis 3) sind.

18. Verfahren zur Konstruktion einer Daten-Cloud nach dem vorhergehenden Anspruch, **dadurch gekennzeichnet, dass** die Verwaltung der Cloud (5) von Daten am Anfang zumindest vorübergehend durch einen oder mehrere Administrator-Computerarbeitsplätze ausgeführt wird, die keine Nutzer-Computerarbeitsplätze sind.

**Claims**

1. Data cloud comprising:

    - contributor computer stations (1 to 3) pooling in the cloud (5), by means of an operation whereby storage resources are made available, at least a part of their storage resources (10, 20, 30) that they will physically preserve,
    - user computer stations (1 to 4) storing data on said storage resources (10, 20, 30) pooled in the cloud so as to share between them access to said stored data,

    wherein a number of said user computer stations (1 to 4) are also contributor computer stations (1 to 3).

2. Data cloud according to claim 1, **characterized in that** all of said user computer stations (1 to 4) are also contributor computer stations (1 to 3) and/or all of said contributor computer stations (1 to 3) are also user computer stations (1 to 4).

3. Data cloud according to either of the preceding claims, **characterized in that** each file of said stored data is stored entirely on the storage resources (10, 20, 30) of at least two different contributor computer stations (1 to 3).

4. Data cloud according to claim 3, **characterized in that** each file of said stored data is stored entirely on the storage resources (10, 20, 30) of a number of different contributor computer stations (1 to 3) between 2 and 5.

5. Data cloud according to claim 3 or 4, **characterized in that**:

    - each file of said stored data is stored entirely on the storage resources (10, 20, 30) of a number $N_{min}$ of different contributor computer stations (1 to 3) of: $N_{min} = \dfrac{\sqrt[3]{U}}{F}$ ,

    with U being the total number of user computer stations (1 to 4), $F = \dfrac{\sum Fi}{U}$, being the reliability of each user computer station (1 to 4) of between 0 and 1 which is the percentage of time in which this user computer station (1 to 4) is activated,
    with $N_{min}$ rounded to the nearest integer or else to an integer contiguous to this nearest integer,
    with $N_{min}$ being at least 2 or preferably at least 3 whatever the values of U and F.

6. Data cloud according to any one of the preceding claims, **characterized in that** the total number of user computer stations (1 to 4) is between 5 and 20, and/or the total number of contributor computer stations (1 to 3) is between 5 and 20.

7. Data cloud according to any one of the preceding claims, **characterized in that** the or all the administrator computer station(s) of the cloud is/are also user computer stations (1 to 4).

8. Data cloud according to any one of the preceding claims, **characterized in that**, with equal size of storage resources (10, 20, 30) pooled by two contributor computer stations (1 to 3) of which one is more often activated than the other, the volume of said data stored on the contributor computer station (1 to 3) more often activated is strictly greater than the volume of said data stored on the contributor computer station (1 to 3) less often activated.

9. Data cloud according to any one of the preceding claims, **characterized in that**, with equal size of data volume between two stored data files of which one is more often consulted than the other by the user computer stations (1 to 4), the stored data file more often consulted is entirely stored on as many or more contributor computer stations (1 to 3) as/than the stored data file less often consulted, at least some of the stored data files more often consulted being stored on strictly more contributor computer stations (1 to 3) than other stored data files less often consulted of similar size.

10. Data cloud according to any one of the preceding claims, **characterized in that** the contributor computer stations (1 to 3) pooling fewer storage resources (10, 20, 30) store, on their pooled storage resources (10, 20, 30), in relative proportion, more data than the contributor computer stations (1 to 3) pooling more storage resources (10, 20, 30).

11. Data cloud according to any one of the preceding claims, **characterized in that** the personal data of a user computer station (1 to 4) tagged as sensitive personal data are duplicated on storage resources (10, 20, 30) pooled on at least one contributor station (1 to 3) different from said user computer station (1 to 4), without becoming accessible to the other user computer stations (1 to 4), not even to the user computer station (1 to 4) which would possibly also be the contributor computer station (1 to 3) on which said sensitive personal data are duplicated.

12. Data cloud according to any one of the preceding claims, **characterized in that** this data cloud (5) is a cloud of infrastructure as a service category for the user computer stations (1 to 4).

13. Data cloud according to any one of the preceding claims, **characterized in that** each user computer station (1 to 4) can access the cloud (5) via an internet connection.

14. Data cloud according to any one of the preceding claims, **characterized in that**:

    - each user computer station (1 to 4) hosts a piece of the client part of the cloud (5),
    - each contributor computer station (1 to 3) hosts a piece of the server part of the cloud (5),
    - each user and contributor computer station (1 to 3) hosts a piece of the client part of the cloud (5) and a piece of the server part of the cloud (5).

15. Data cloud according to any one of the preceding claims, **characterized in that** access to said stored data is strictly prohibited to any computer station which is not identified as user computer station (1 to 4) of this cloud (5) or which is not identified as administrator computer station of this cloud (5).

16. Method for using a data cloud comprising an access, to stored data pooled in the cloud (5), by user computer stations (1 to 4) of which at least some are also contributor computer stations (1 to 3), that is to say that they store on their storage resources (10, 20, 30) at least a part of these pooled stored data in the cloud;
    said contributor computer stations pooling in the cloud at least a part of their storage resources by means of an operation whereby storage resources are made available.

17. Method for constructing a data cloud comprising:

    - a pooled storage (63) of data, by user computer stations (1 to 4), on storage resources (10, 20, 30) in the cloud pooled by contributor computer stations (1 to 3), said contributor computer stations pooling in the cloud, by means of an operation whereby storage resources are made available, at least a part of their storage resources that they will physically preserve;
    - a shared access (65), to said pooled stored data, by said user computer stations (1 to 4),

    wherein a number of said user computer stations (1 to 4) are also contributor computer stations (1 to 3).

18. Method for constructing a data cloud according to the preceding claim, **characterized in that** the management of the data cloud (5) is performed, at least temporarily at the beginning, by one or more administrator computer stations which are not user computer stations.

Utilisateur 1 — 1

Utilisateur 4 — 4

Espace total utilisable — 11

12 — Mise à disposition d'un espace de stockage

Espace total utilisable — 42

50 — 20 — 32 — 3

Disque, partition ou fichier de stockage

Disque, partition ou fichier de stockage

Disque, partition ou fichier de stockage

Espace total utilisable

Gestion des redondances

Fichier 1
Fichier 2

Fichier 2
Fichier 3

Fichier 3
Fichier 1

Utilisateur 3

102 — 101 — 10

202 — 203

303 — 301

31

Volume aggrégé visible par les utilisateurs

Mise à disposition d'un espace de stockage

30

5

Mise à disposition d'un espace de stockage

Espace total utilisable

22 — 21

Utilisateur 2 — 2

EP 2 990 948 B1

FIG. 1

MISE EN COMMUN DE RESSOURCES — 61

AGRÉGATION DE RESSOURCES — 62

STOCKAGE EN COMMUN DE DONNÉES — 63

GESTION DE REDONDANCE — 64

ACCÈS PARTAGÉ AUX DONNÉES — 65

FIG. 2

## RÉFÉRENCES CITÉES DANS LA DESCRIPTION

**Documents brevets cités dans la description**

- WO 2013097147 A
- EP 2784985 A1